# EUROPEAN PATENT SPECIFICATION

(11) **EP 4 075 173 B1**
(45) Date of publication and mention of the grant of the patent: **12.02.2025**
(21) Application number: 20898441.9
(22) Date of filing: 25.11.2020
(51) Int. Cl.: G02B 5/20, G02B 5/30, G02B 26/00

(54) **METHOD FOR MANUFACTURING LIGHT VALVE AND LIGHT VALVE MANUFACTURED THEREBY**
VERFAHREN ZUR HERSTELLUNG EINES LICHTVENTILS UND DAMIT HERGESTELLTES LICHTVENTIL
PROCÉDÉ DE FABRICATION DE VALVE DE LUMIÈRE ET VALVE DE LUMIÈRE FABRIQUÉ PAR CELUI-CI

(30) Priority: 11.12.2019 KR 20190164514
(43) Date of publication of application: 19.10.2022
(73) Proprietor: G2B CO., LTD., Pyeongtaek-si, Gyeonggi-do 17791 (KR)
(72) Inventor: YU, Byung-Seok, Goyang-si Gyeonggi-do 10415 (KR)
(74) Representative: Maiwald GmbH
(86) International application number: PCT/KR2020/016785
(87) International publication number: WO 2021/118113

(56) References cited:
- JP-A- 2002 214 653
- JP-A- 2002 214 653
- JP-A- 2006 064 832
- JP-A- 2006 064 832
- KR-A- 20150 081 274
- KR-A- 20180 121 123
- KR-A- 960 014 118
- KR-B1- 102 151 969
- US-A1- 2013 208 342
- US-A1- 2015 362 728

## Description

### [Technical Field]

The present invention relates to a method for manufacturing a light valve in which a liquid-state light-polarizing suspension is dispersed in a specific polymer resin and a light valve manufactured thereby. More particularly, the present invention relates to a method for manufacturing a light valve in which a light-polarizing suspension is dispersed as a separate body in the form of a fine droplet or droplets which is a spherical droplet or are spherical droplets in a specific polymer resin having excellent adhesive strength to a substrate, and a light valve manufactured thereby.

### [Background Art]

A general light valve was first invented in 1934 by US Patent Nos. 1,951,664 and 1,955,923 of E. H. Land, USA and is in the form of a structure in which a liquid-state light-polarizing suspension is injected between two transparent conductive substrates having a narrow gap therebetween.

According to the invention by E. H. Land, for a liquid light-polarizing suspension injected between two transparent conductive substrates, due to the Brownian motion of small light polarization variable particles dispersed in the suspension when an electric field is not applied, most of the incident light rays into the suspension are reflected, scattered or absorbed by the particles, and only a very small portion is transmitted.

That is, the extent of transmission, reflection, scattering and absorption is determined by the shape, nature and concentration of the light polarization variable particles dispersed in the suspension, and the amount of light energy irradiated.

When an electric field is applied to the above structure, an electric field is formed on the suspension through two upper and lower transparent conductive substrates, and particles exhibiting a light polarization function cause polarization and are arranged in parallel to the electric field, so that light is transmitted between particles, or through the long axis of the particles, and ultimately, the particles become transparent.

The sedimentation of light polarization variable particles was prevented and aggregation was prevented by adding a dispersion aid to enhance the dispersibility of light polarization variable particles, so that problems raised by an initial light valve was solved by filming a liquid light-polarizing suspension injected between two transparent conductive substrates.

Korean Patent Application Laid-Open No. 10-1992-0011659, Japanese Patent Application Laid Open No. JP-A-6-129168, US Patent Nos. 5,409,734, 6,900,923 and 7,791,788 disclose inventions that solve the above problems.

That is, when an electric field is not applied to a film, the Brownian motion of the droplets of the liquid light-polarizing suspension dispersed in the film or the light polarization variable particles contained in the separate body causes a vivid colored state by the dichroism of the light polarization variable particles.

Then, when an electric field is applied by using a suspension agent having a refractive index that matches that of a polymer resin which is a film medium, light polarization variable particles in the light-polarizing suspension are arranged in parallel to the electric field, and thus are converted into a colorless and transparent state.

Further, since a light valve is manufactured in the form of a film, it is possible to solve the problems that have emerged when a light valve in the related art is manufactured.

However, the light valve also has a problem in that the contact coefficient and bond strength with an ITO surface used as a transparent conductive film are low because a material located between the two transparent conductive substrates is typically a silicone-based polymer or an acrylic polymer, that is, an adhesion durability problem of a film product due to a weak adhesive strength, and furthermore, a peeling phenomenon with the passage of time has emerged as a problem. Documents US 2013/208342 A1 and US 2015/362728 A1 disclose a method of producing a light valve.

### [Disclosure]

### [Technical Problem]

The present invention has been made in an effort to provide a method for manufacturing a light valve capable of solving difficulties such as a particle sedimentation problem, a problem of a change in optical density due to external environment, a problem of injecting a liquid suspension, and a problem of keeping a gap between substrates constant, which are raised as problems in the related art in which the light-polarizing suspension in a liquid state is used as it is by using a film having a structure in which a liquid light-polarizing suspension is dispersed in the form of a droplet or droplets are irregularly linked in a polymer resin; and a light valve manufactured thereby.

The present invention has also been made in an effort to provide a method for manufacturing a light valve capable of enhancing an interfacial adhesive strength during the manufacture of a product by using a material having an adhesive strength as a polymer matrix in which a light-polarizing suspension is present as a droplet or a linker of droplets, of simplifying the process, and of solving a peeling problem during the long-term use in an actual environment; and a light valve manufactured thereby.

### [Technical Solution]

A light valve manufactured by a method for manufacturing a light valve according to an exemplary embodiment of the present invention for solving the technical problems is composed of a film in which a light-polarizing suspension, containing: 5 to 20 wt% of light polarization variable particles showing light polarization characteristics and having a size of 0.2 to 0.5 µm; 2 to 10 wt% of a dispersion aid; and 80 to 93 wt% of a suspension agent which is a plasticizer, is dispersed in the form of fine droplets in a polymer resin having excellent adhesive strength to a substrate, wherein the weight ratio of the droplets and the polymer resin is 0.5 to 1:1.

Another exemplary embodiment is characterized by including any one or two among a liquid light-polarizing suspension produced by mixing light polarization variable particles produced by adding a polymer material which enhances an effect of dispersing light polarization variable particles while having no affinity for a polymer resin which is a film medium with a plasticizer solution during the preparation of the light polarization variable particles, or a liquid light-polarizing suspension prepared by additionally adding a polymer dispersant to the above liquid light-polarizing suspension.

Still another exemplary embodiment is characterized by manufacturing a light valve by a phase separation method by a heat drying method after mixing a polymer resin solution obtained by dissolving the polymer resin having excellent adhesive strength to a substrate according to the present invention in a solvent with a liquid light-polarizing suspension.

Yet another exemplary embodiment is characterized in that the polymer resin of the present invention is polyvinyl butyral, and regarding a plasticizer, at least one plasticizer among diisooctyl phthalate-, dioctyl phthalate-, butyloctyl phthalate-, dioctyl isophthalate-, trioctyl trimellitate - and trioctyldecyl trimellitate-based plasticizers is used as a suspension agent.

Yet another exemplary embodiment is characterized in that the polymer resin of the present invention is polyvinyl butyral, and regarding a suspension agent constituting the light-polarizing suspension, at least one plasticizer among trioctyl trimellitate- or trioctyldecyl trimellitate-based plasticizers is used as the suspension agent.

Yet another exemplary embodiment is characterized in that as the dispersion aid of the present invention, an A-B block copolymer or graft polymer of poly(neopentyl-block-hydroxyethyl methacrylate), acrylonitrile-styrene, and poly(neopentyl methacrylate-block-styrene) is used.

### [Advantageous Effects]

The method for manufacturing a light valve of the present invention and a light valve manufactured thereby have an effect of improving the simplification and characteristics of the manufacturing process because a large product such as window and door glass for construction is easily manufactured, there is no need for a complex manufacturing process during the manufacture of a liquid crystal display device, that is, an orientation treatment, a gap maintenance treatment, sealing, liquid crystal injection, and attachment of a polarizing plate, the contrast effect is high, and it is possible to manufacture a flat display device having excellent sharpness without viewing angle dependence.

### [Description of the Drawings]

FIG. 1 is a cross-sectional structural view illustrating a film-type light valve manufactured by the present invention,
FIG. 2 is a cross-sectional structural view illustrating a principle in which light polarization variable particles in a liquid light-polarizing suspension dispersed in a film for the light valve of the present invention block incident light when an electric field is not applied, and
FIG. 3 is a cross-sectional structural view illustrating a principle in which light polarization variable particles in a liquid light-polarizing suspension dispersed in a film for the light valve of the present invention transmit incident light when an electric field is applied.

*** Reference Signs List ***

| | | | |
|---|---|---|---|
| 1 : | Film | 2 : | Polymer resin |
| 3 : | Suspension | 4 : | Variable particles |
| 5 : | Droplets | 8 : | Transparent conductive thin membrane |
| 9 : | Substrate | 10 : | AC power supply |
| 12 : | Switch | 13 : | Incident light |

### [Mode for Invention]

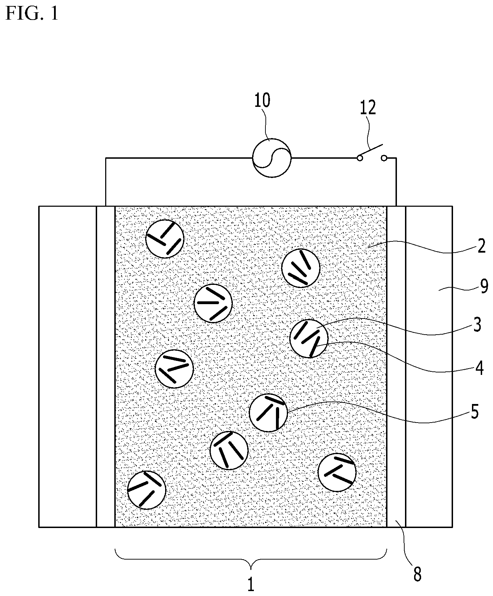

In order to fully understand the present invention, preferred exemplary embodiments of the present invention will be described with reference to accompanying drawings FIGS. 1 to 3. The exemplary embodiments of the present invention may be modified in various forms, and it should not be interpreted that the scope of the present invention is limited to the exemplary embodiments to be described in detail below. Therefore, the shape of the element in the drawing, and the like may be exaggerated to emphasize a clearer description. It should be noted that the same configuration may be illustrated with the same reference numeral in each drawing. A detailed description of known functions and configurations determined to unnecessarily obscure the gist of the present invention will be omitted.

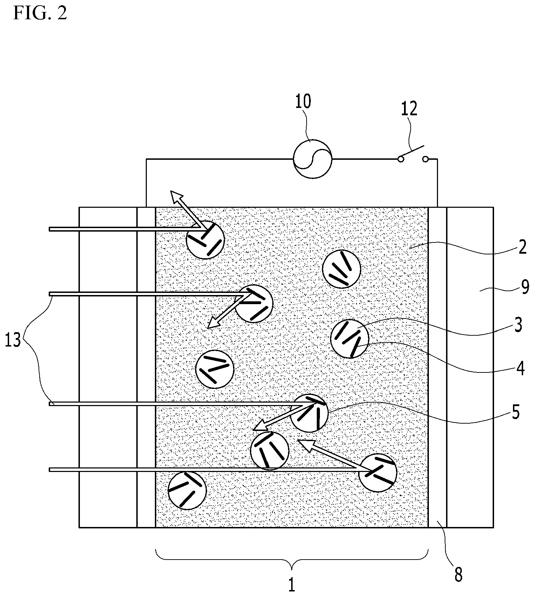

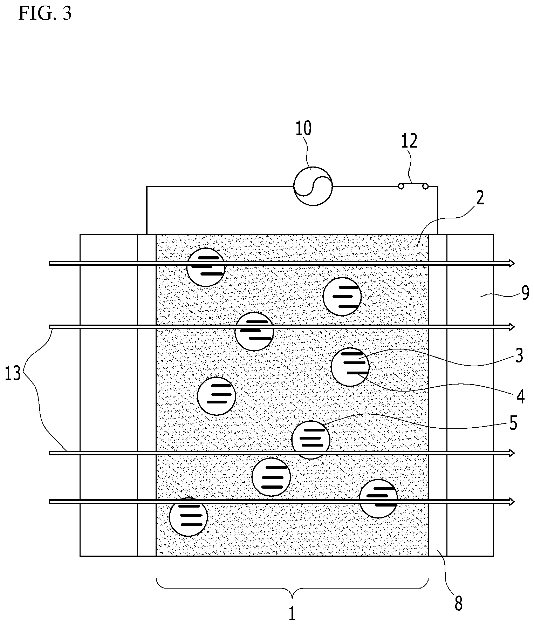

FIG. 1 is a cross-sectional structural view illustrating a film-type light valve manufactured by the present invention, FIG. 2 is a cross-sectional structural view illustrating a principle in which light polarization variable particles in a liquid light-polarizing suspension dispersed in a film for the light valve of the present invention block incident light when an electric field is not applied, and FIG. 3 is a cross-sectional structural view illustrating a principle in which light polarization variable particles in a liquid light-polarizing suspension dispersed in a film for the light valve of the present invention transmit incident light when an electric field is applied.

More specifically, FIG. 1 illustrates a light valve using a film 1 of the present invention, and the light valve is manufactured without the use of a peripheral sealing treatment and a gap maintaining agent, as a structure in which the film 1, in which droplets 5 of a liquid light-polarizing suspension are dispersed in a polymer resin 2 which is a film medium by a phase separation method, is sandwiched between two substrates 9 coated with a transparent conductive thin film 8. An AC power supply 10 is used, and the formation of an electric field may be artificially adjusted by operating a switch 12.

FIG. 2 illustrates a principle in which incident light is blocked when the switch 12 of FIG. 1 is short-circuited and no electric field is applied to the film 1 of the present invention, and variable particles in a suspension 3 constituting the droplets 5 of the liquid light-polarizing suspension dispersed in the polymer resin 2 which is a film medium, that is, light-polarizing variable particles 4 perform an irregular Brownian motion, so that incident light 13 is absorbed, scattered and reflected by the light-polarizing variable particles 4, and thus is not transmitted.

FIG. 3 illustrates a principle in which the incident light 13 is transmitted when the switch 12 of FIG. 1 is connected to the film 1 produced by the present invention and an electric field is applied, droplets 5 of the liquid light-polarizing suspension are dispersed in the form of fine droplets in the polymer resin 2 used as a film medium, and since the light polarization variable particles 4 suspended in the suspension 3 constituting the droplet 5 are arranged in a direction parallel to an electric field formed between electrodes, the incident light 13 passes between the light polarization variable particles 4, and is also transmitted because the incident light 13 travels in the long axis direction of the light polarization variable particles 4.

In this case, when the refractive index of the polymer resin 2 and the refractive index of a plasticizer, which is a suspension agent, are matched, a high-quality product without scattering and deterioration in transparency according to the viewing angle is manufactured.

### [Example 1]

After a polymer resin 2 solution was prepared by dissolving 10 g of the polymer resin 2 which is a film medium in 40 g of a solvent, 5 g of a liquid light-polarizing suspension 3 composed of 20 wt% of light polarization variable particles 4, 65 wt% of a suspension agent and 15 wt% of a dispersion aid was added thereto, and mechanically mixed for 30 minutes, and then mixed by ultrasonic waves for about 2 hours. After such a mixing step was repeated twice, the resulting mixture was defoamed. The defoamed mixture was applied onto a glass or PET film substrate 9 coated with a transparent conductive thin film 8 to a thickness of 200 µm. Thereafter, when the solvent was volatilized in a heating bath adjusted to room temperature or 50 to 90°C, the light-polarizing suspension 3 began to be phase-separated in a state of spherical droplets 5 in the polymer resin 2, and when the solvent was completely removed, a film 1 having a dry thickness of about 50 µm was prepared. A light valve was manufactured by covering the film 1 with another substrate 9 and connecting electrodes.

### [Example 2]

A mixture was prepared while changing the content of the liquid light-polarizing suspension 3 having the same composition in the composition of Example 1 from 6 g to 10 g, and a light valve was manufactured in the same manner as in Example 1. In this case, as the content of the suspension 3 was increased, a film with a structure, in which the liquid light-polarizing suspension 3 in the polymer resin 2 was not dispersed into spherical droplets 5 and the droplets 5 were linked to each other, was produced.

### [Example 3]

A light valve was manufactured in the same manner as in Example 1 using light polarization variable particles 4 having a size within 0.1 to 1 µm as the light polarization variable particles 4 of Example 1, for example, light polarization variable particles 4 of hydrocinchonidine having high electrical conductivity and excellent UV durability and thermal stability.

### [Example 4]

A light valve was manufactured in the same manner as in Example 1 using light polarization variable particles 4 having a size within 0.1 to 1 µm as the light polarization variable particles 4 of Example 1, for example, light polarization variable particles 4 of herapathite having high electrical conductivity and excellent UV durability and thermal stability.

### [Example 5]

A light valve was manufactured in the same manner as in Example 1 using light polarization variable particles 4 having a size within 0.1 to 1 µm as the light polarization variable particles 4 of Example 1, for example, light polarization variable particles 4 of pyrazine dicarboxylic acid polycalcium iodide having high electrical conductivity and excellent UV durability and thermal stability.

### [Example 6]

A light valve was manufactured in the same manner as in Example 1 using an A-B block copolymer of poly(neopentyl methacrylate-block-hydroxyethyl methacrylate), which is a polymer material as a dispersion aid which prevents the aggregation of crystals and improves dispersibility.

### [Example 7]

A light valve was manufactured in the same manner as in Example 1 using an A-B block copolymer of acrylonitrile-styrene, which is a polymer material as a dispersion aid which prevents the aggregation of crystals and improves dispersibility.

### [Example 8]

A light valve was manufactured in the same manner as in Example 1 using an A-B block copolymer of poly(neopentyl methacrylate-block-styrene), which is a polymer material as a dispersion aid which prevents the aggregation of crystals and improves dispersibility.

### [Example 9]

A light valve was manufactured in the same manner as in Example 1 using polyvinyl butyral as the polymer resin 2 and trioctyl trimellitate as the suspension agent in Example 1.

### [Example 10]

A light valve was manufactured in the same manner as in Example 9 using methyl ethyl ketone, methyl benzoate, toluene, xylene, or the like as the polymer resin 2 solvent of Example 9.

### [Example 11]

A light valve was manufactured in the same manner as in Example 1 using polyvinyl acetate instead of the polymer resin 2 of Example 1 and using an adipate-based plasticizer.

### [Example 12]

A light valve was manufactured in the same manner as in Example 11 using a phthalate-based or sebacate-based plasticizer instead of the plasticizer of Example 11.

### [Example 13]

A light valve was manufactured in the same manner as in Example 1 using a solvent such as toluene and xylene as the polymer resin 2 solvent of Example 11.

### [Example 14]

A light valve was manufactured in the same manner as in Example 1 using polyurethane instead of the polymer resin 2 of Example 1 and using a phathalate-based, triphthalate-based or mellitate-based plasticizer as the suspension agent.

### [Example 15]

A light valve was manufactured in the same manner as in Example 1 using a solvent such as toluene, xylene, methyl ethyl ketone, and ethyl acetate as the polymer resin 2 solvent of Example 14.

The light valve of the present invention as described above has a structure in which the liquid light-polarizing suspension 3 composed of a dispersion aid in the polymer resin 2 forming the film 1 is dispersed in the form of fine droplets 5 or droplets 5 are irregularly linked to each other.

The light-polarizing suspension 3 used in the present invention is incompatible or partially compatible with 1 to 20 wt% of light polarization variable particles 4 and the polymer resin 2 which is a film medium, and a suspension agent, which is a plasticizer having a refractive index difference within 0.02 or less, more suitably 0.01 with the polymer resin 2, is mixed at a ratio of 80 to 99 wt%.

The light polarization variable particles 4 used herein are a polyiodine compound produced by reacting an iodine compound with one material selected among pyrazine 2,3-dicarboxylic acid, pyrazine 2,5-dicarboxylic acid, pyridine 2,5-dicarboxylic acid, hydroxyquinoline, hydrocinchonidine sulfate and 2-hydroxypyridine, which are basic forming materials for the light polarization variable particles 4 in the presence of a polymer dispersion agent which has no affinity for a polymer resin 2 to be a film medium and enhances the dispersibility of the light polarization variable particles 4. The light polarization variable particles 4 (crystal) are disclosed in US Patent No. 2,041,138 (E. H. Land), 2,306,108 (Land et al), 2,375,963 (Thomas), and 4,270,841 (R. L. Saxe) and British Patent No. 433,455.

The polyidodide crystal is a herapathite crystal produced by reacting quinine bisulfate with iodine, HI, and the like, and other quine alkaloid-based salts are also reacted with iodine or HI to form a polyiodide such as cinchonidine bisulfate.

In addition, one of an iodide, a chloride, and a bromide, one of alkali or alkaline earth halides and/or hydrogen halide, and one of pyrazine carboxylic acid and pyridine carboxylic acid are selected and reacted together to synthesize a polyhalide such as a polyiodine compound, a polychlorine compound and a polybromine compound.

The size of the light polarization variable particles 4 of the present invention is 1 µm or less, and in particular, particles having a size of 0.1 to 0.3 µm are useful. When the size of the light polarization variable particles 4 is 1 µm or more, a problem in that clarity deteriorates even when an electric field is applied due to the dichroism of the particles remaining in the polymer resin 2 may occur.

The dispersion aid used in the present invention serves as a dispersant in a specific suspension agent and selectively adheres to and covers light polarization crystals to facilitate the movement of the light polarization variable particles 4 into phase-separated droplets 5 during phase separation, and an A-B type block copolymer, which is not electrically conductive while being selectively dissolved in the suspension 3, does not have too high viscosity, and has no affinity for a film medium, was used.

That is, when such a dual polymer is used, one of the A or B fragment covers the surfaces of the light polarization variable particles 4, and as the other fragment is dissolved in the suspension 3, the light polarization variable particles 4 are homogeneously dispersed in the suspension 3, and the dual polymer also induces the light polarization variable particles 4 to be incorporated into the phase-separated droplets 5 during phase separation.

As the A-B type block copolymer as described above, poly(neopentyl methacrylate-block-hydroxyethyl methacrylate), acrylonitrile-styrene, poly(neopentyl methacrylate-block-styrene) block copolymers and the like are useful.

Details of these dual polymers are described in detail in A. Noshay & J.E. Mc Grath, "Block Copolymers-Overview & Critical Survey", Academic Press,1977. P 83-163 and R. J. Ceresa, "Block and Graft Copolymer", Butterworths, Co., 1962.

The content of the A-B type block copolymer in the light-polarizing suspension 3 used in the present invention is 10 wt% or less, and effectively, 2 to 5 wt% is useful. When a larger amount of A-B type block copolymer is contained, the sensitive rate becomes slow, and when the electric field strength is low, there is a problem in that the particles are not variable. In addition, even though a phosphate-based surfactant is used as a dispersion aid, a product having variable characteristics may be manufactured.

As the suspension agent, those using an ester, an oil, an aromatic alcohol, and an aromatic ester are disclosed in US Patent Nos. 1,951,664, 2,290,581, 3,625,869, and 4,442,019.

Such a liquid suspension agent is required to have high electrical resistance, be inert, and have a low viscosity. When a light valve is manufactured using the film 1 according to the present invention, a plasticizer, which is incompatible or partially compatible with the polymer resin 2 which is a film medium and has a refractive index difference within 0.02 with the polymer resin 2, is selected. As the plasticizer, phthalate-based (dioctyl phthalate, diisooctyl phthalate, dibutyl phthalate, butyloctyl phthalate, and the like), isophthalate-based (dioctyl isophthalate), mellitate-based (trioctyl trimellitate, trioctyldecyl trimellitate, trienebutyl trimellitate, and the like), adipate-based (dioctyl adipate, and the like), and benzoate-based (diethyl glycol, dibenzoate, and the like) plasticizers may be used in the present invention, and detailed information on these plasticizers and compatibility with the polymer resin 2 is described in detail in J. K. Sears et al, "The technology of plasticizer", John Wiley & Sons, N.Y. (1982) P 966-1077.

The compatibility of the plasticizer and the polymer resin 2 which may be used in the preparation of the film 1 according to the present invention is as shown in [Table 1] below.

**[Table 1]**

| | Molecular weight | Density | Refractive index | Boiling point (°C) | PMMA | PNB | PVAc | CA | CAB | CN | EC |
|---|---|---|---|---|---|---|---|---|---|---|---|
| | | | | Meltingpoint (°C) | | | | | | | |
| Dioctyl phthalate | 390 | 0.983 (25°C) | 1.485 (25°C) | 231(5mm) | C | P | I | I | C | C | C |
| | | | | -46 | | | | | | | |
| Butyloctyl phthalate | 334 | 0.993 (25°C) | 1.485 (25°C) | 340(740mm) | P | P | I | I | P | C | C |
| | | | | -50 | | | | | | | |
| Diisocotyl phthalate | 390 | 0.985 (23°C) | 1.485 (23°C) | 288 239(5mm) | C | P | C | I | C | C | C |
| | | | | -50 | | | | | | | |
| Dioctyl isophthalate | 391 | 0.984 (20°C) | 1.4875 (20°C) | 241(5mm) | P | C | I | I | C | C | C |
| | | | | -46 | | | | | | | |
| Methyl oleate | 296 | 0.875 (25°C) | 1.4505 (25°C) | 167 170(2mm) | P | P | P | I | P | C | C |
| | | | | -16 | | | | | | | |
| Methyl ricinoleate | 310 | 0.925 (25°C) | 1.4620 (25°C) | 170(1mm) | P | C | C | P | C | C | C |
| | | | | -30 | | | | | | | |
| Diisooctyl azelate | 413 | 0.920 (25°C) | 1.450 (25°C) | 225 244(4mm) | - | I | P | C | C | C | C |
| | | | | -68 | | | | | | | |
| Diethylene glycol dibenzoate | 314 | 1.178 (25°C) | 1.5424 (25°C) | 230 242(5mm) | C | C | C | P | C | C | C |
| | | | | 16.28 | | | | | | | |
| Epoxylated soybean oil | 1000 | 1.02 (25°C) | 1.4720 (25°C) | | I | I | I | I | P | C | C |
| | | | | -4 | | | | | | | |
| Dioctyl adipate | 371 | 0.927 (20°C) | 1.446 | 214(5mm) | P | P | P | P | C | C | C |
| | | | | -70 | | | | | | | |
| Trioctyl trimellitate | 547 | 0.989 (25°C) | 1.4832 (23°C) | 260(1mm) | C | P | - | - | C | C | C |
| | | | | -38 | | | | | | | |
| C : Compatible | | | | | | | | | | | |
| P : Partially compatible | | | | | | | | | | | |
| I : Incompatible | | | | | | | | | | | |

As a method for preparing a film 1 having a structure in which a specific liquid is dispersed in the form of fine droplets 5 in a polymer resin 2 or a structure in which droplets 5 are linked, there are, first, a method for producing a film 1 by mechanically mixing a suspension agent having no affinity for water with an aqueous solution in which an aqueous polymer material is dissolved to create an emulsion state (a state in which a suspension agent is encapsulated in an aqueous polymer solution), coating with the emulsion to a certain thickness, and then evaporating moisture, and second, a phase separation method by polymerization. Third, there is a phase separation method by temperature, and fourth, there are a phase separation method by solvent volatilization, and the like.

Although these methods were partially used in the manufacture of a light valve using liquid crystals, these methods have not been used when a film 1 is prepared using a light-polarizing suspension in the related art, because it is difficult to disperse the light-polarizing suspension 3 in the form of droplets 5 in the polymer resin 2 or separate the light-polarizing suspension 3 from the polymer resin 2, and it is difficult for the light polarization variable particles 4 to be incorporated into droplets 5 dispersed in the polymer resin 2 or the separated suspension 3.

Meanwhile, in the method for manufacturing a light valve of the present invention and the light valve manufactured thereby, a liquid light-polarizing suspension 3 composed of a plasticizer which enhances the dispersibility of light polarization variable particles 4 (size of 0.1 to 1 µm), is incompatible or partially compatible with the polymer resin 2 (film medium), and has a refractive index difference within 0.02 or less with the polymer resin 2 and a dispersion aid which prevents the aggregation and deposition of particles and facilitates the movement of the light polarization variable particles 4 into a separate body of fine droplets 5 or droplets 5 during phase separation is mixed with a polymer resin 2 material to create an emulsion state, and then the phase may be separated.

In the present invention, a phase separation method by solvent volatilization, a phase separation method by polymerization, a phase separation method by temperature, and the like were used in order to prepare a film 1 in which the liquid light-polarizing suspension 3 is dispersed in the form of fine droplets 5 in a specific polymer resin 2 or a film 1 having a structure in which droplets 5 are irregularly linked to each other.

However, when a method by emulsion, which is a method used to manufacture a light valve using liquid crystals, is used, there is a problem in that it is difficult to prepare a film 1 having the same characteristics because the suspension 3 reacts with moisture to lose light polarization characteristics.

In the present invention, since a liquid light-polarizing suspension capable of dispersing the light polarization variable particles 4 in the suspension 3 was used instead of liquid crystals, light is not scattered even when an electric field is not applied, unlike a light valve in the form of a film 1 using liquid crystals, so that a deep blue colored state having excellent sharpness and a wide viewing angle is exhibited.

And then, it is characterized in that by adjusting the content of the light polarization variable particles 4 or by adjusting the electric field strength, not only the amount of transmitted light can be adjusted arbitrarily, but also it is possible to prepare a film 1 for a light valve having a use temperature range of - 20 to 120°C wider than that of a light valve film 1 using liquid crystals and having excellent durability against ultraviolet rays even though an ultraviolet absorber is not added.

In the first manufacturing method among the methods for manufacturing a light valve of the present invention, the light valve was manufactured using a process of preparing a homogeneous polymer resin 2 solution by first dissolving a polymer resin 2 in a specific solvent, a process of homogeneously mixing a liquid light-polarizing suspension 3 with the polymer resin 2 solution, and a phase separation method of applying the mixed solution onto a glass or polymer film 1 coated with a transparent conductive thin film 8 to a thickness of 10 to 200 micrometers and the solvent volatilization of volatilizing a solvent in the atmosphere or at a predetermined temperature.

In this case, when the polymer resin 2 was cured, a light valve was manufactured by thermally compressing another transparent conductive glass or transparent conductive substrate 9 thereon.

The polymer resin 2 used in the phase separation method of the present invention by solvent volatilization has a refractive index in a range of 1.46 to 1.50, and thermoplastic resins, such as polyvinyl butyral, polyurethane, polyvinyl acetate, polymethyl methacrylate and cellulose acetate, which are incompatible or partially compatible with a suspension agent, were selected.

In order to mix the light-polarizing suspension 3 with the polymer resin 2, a polymer resin 2 solution needs to be prepared by first dissolving the polymer resin 2 in a specific solvent. The following [Table 2] shows the characteristics and solvents of the polymer resin 2.

As the resin solvent used in the present invention, an ester-based solvent such as isoamyl acetate, benzyl acetate, ethyl acetate, and methyl acetate and an aromatic hydrocarbon-based solvent such as methyl ethyl ketone, toluene, and xylene, which react with light polarization variable particles or do not affect the characteristics thereof in [Table 2], were used to prepare a polymer resin 2 solution. Information on the characteristics and solvents of these polymeric resins 2 is described in J. Brandrup et al, 'Polymer Handbook' 3rd ed., John Wiley & Sons, 1989, VII/379 - VII/403.

When the film 1 is prepared by the solvent volatilization method of the present invention, a liquid light-polarizing suspension 3 containing a plasticizer which is incompatible or partially compatible with a polymer resin 2, which is a film medium and has a similar refractive index is homogeneously mixed with the polymer resin 2 dissolved in a solvent which does not affect optical characteristics of the light polarization variable particles 4.

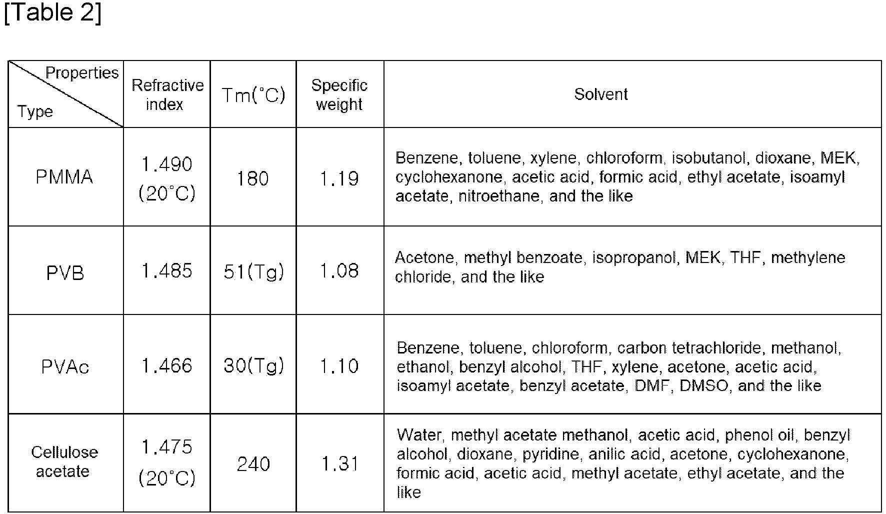

When a transparent conductive substrate is coated with the mixed solution to a predetermined thickness, and then the solvent is volatilized at room temperature or a predetermined temperature, a phase separation occurs while the polymer resin 2 is solidified, so that a film 1, in which the liquid light-polarizing suspension 3 is dispersed in the polymer resin 2, is produced.

In this case, since a liquid light-polarizing suspension 3 is dispersed in the form of fine droplets 5 or in a form in which droplets 5 are irregularly linked to each other according to the mixing ratio of a polymer resin 2 and the light light-polarizing suspension 3, another transparent conductive substrate 9 is attached onto a film 1 produced as described above, thereby completing a film 1 type light valve.

In this case, the dispersed droplets 5 have a size of 1 to 30 µm, and the size of droplets 5, the form of droplets 5 and the form in which droplets 5 are irregularly linked are determined by the volatilization rate of a solvent, the concentration of each component constituting the light-polarizing suspension 3, the viscosities of the used light-polarizing suspension 3 and a polymer resin 2 solution, the compatibility of a plasticizer which is a suspension medium in the suspension 3 with the polymer resin 2, and the like.

When an electric field is applied to a light valve using the film 1 according to the present invention, dispersed fine droplets 5 or light polarization variable particles 4 contained in the suspension 3 separated by a linked structure are arranged in parallel to the electric field, so that the film 1 becomes colorless and transparent.

In this case, coloration and bleaching variable rates are determined by the viscosity of the liquid light-polarizing suspension 3, particularly, the amount of dispersion aid added, the concentration of the plasticizer, and the size and concentration of the light polarization variable particles.

The method for manufacturing a light valve using the second film 1 of the present invention and a light valve manufactured thereby are by a phase separation method by polymerization, which manufactures the light valve by homogeneously mixing the liquid light-polarizing suspension 3 with a monomer or prepolymer of a polymer resin, then applying the mixed solution onto a glass or another transparent conductive substrate 9 coated with a transparent conductive thin film 8 to a thickness of 10 to 200 µm, covering a substrate 9 on which another transparent conductive thin film 8 is formed, and then performing polymerization, and in this method, as the polymer resin 2, monomers such as methyl methacrylate and vinyl butyral, which are thermoplastic resins, and epoxy, silicone, urethane and the like, which are thermosetting resins, can be used.

In the present invention, the liquid light-polarizing suspension 3 used in the solvent volatilization method mentioned above was used as it is, the film 1 was prepared by a condensation reaction using a commercially available epoxy when the polymer resin 2, which is a film medium, is a thermosetting resin, and the film 1 was prepared according to a radical reaction by adding benzol peroxide as a polymerization initiator to methyl methacrylate when the polymer resin 2 is a thermoplastic resin. As the polymerization progresses, the chain length of the polymer resin 2 becomes longer, and accordingly, the solubility of the light-polarizing suspension 3 is gradually decreased, so that phase separation occurs depending on the degree of polymerization progress, and the liquid light-polarizing suspension 3 is dispersed in fine droplets 5 in the polymer resin 2.

In this case, the size of droplets 5 is adjusted by the polymerization rate, the concentration of each component, the viscosity and diffusion rate of light-polarizing suspension 3 and polymer resin 2 used, the compatibility of a plasticizer contained in the light-polarizing suspension 3 with the polymer resin 2, and the like.

The method for manufacturing a light valve using the third film 1 of the present invention and a light valve manufactured thereby are by a phase separation method by temperature, and after a thermoplastic resin, which is a film medium, is heated to the melting temperature or higher to produce a solution, the liquid light-polarizing suspension 3 is homogeneously mixed with the solution, and then a phase separation occurs from a predetermined temperature when the mixed solution is again slowly cooled, so that a film 1, in which the liquid light-polarizing suspension 3 is dispersed in the polymer resin 2, is produced.

In this case, according to the mixing ratio of the polymer resin 2 and the liquid light-polarizing suspension 3, the liquid light-polarizing suspension 3 is dispersed in the form of fine droplets 5 or in a form in which droplets 5 are irregularly linked to each other. In this case, the factors that determine the size of the droplets 5, the form of the droplets 5, and the form to which the droplets 5 are linked are physical variables such as cooling rate and viscosity.

As such a manufacturing method, in order to lower the melting temperature of the polymer resin 2, a solution is produced by adding a plasticizer compatible with the polymer resin 2 and then heating the resulting mixture. The liquid light-polarizing suspension 3 containing a plasticizer, which is incompatible with or partially compatible with the polymer resin 2, is added to and mixed with the heated polymer resin 2 solution. This mixture is applied to a transparent conductive substrate 9 preheated to about 100°C to a predetermined thickness and cooled at a rate of 5 to 10°C/min to prepare a film 1.

When the film 1 is completed by the above process, a light valve is produced by covering another transparent conductive substrate 9 thereon and attaching electrodes thereto, or a light valve is produced by covering another transparent conductive substrate 9 on an application layer before cooling and attaching electrodes thereto.

The present invention is a film 1 whose light transmittance can be artificially adjusted by forming an electric field, and when the electric field is not formed, a clear dark blue colored state without light scattering is maintained, and when the electric field is formed, the film 1 is converted to a colorless and transparent state. This process exhibits a reversible repetition property of 200,000 times or more. The light transmittance in a colorless and transparent state and the sharpness in a colored state can be enhanced by matching the refractive index of the plasticizer contained in the liquid light-polarizing suspension 3 with the refractive index of the polymer resin 2 which is a film medium and adding an appropriate amount of dispersion aid thereto. The power supply used is all types of periodic signals (alternating current) including sine, square and triangle waves, and can be driven in a range of 30 to 300 volts (effective value) and a frequency of 30 Hz to 10 kHz.

That is, the film becomes transparent or colored whether an electric field is or not applied, and the response time to the electric field is within several hundred milli-seconds during bleaching (conversion from the colored state to the transparent state), and several tens milli-seconds during colorization (conversion from the transparent state to the colored state).

As the transparent conductive substrate 9 used when a light valve is manufactured using the film 1 of the present invention, a glass or polymer film 1 coated with a general transparent conductive thin film 8 is used, but the gap between upper and lower substrates 9 is so narrow that a substrate 9 in which a transparent insulation layer within 200 to 1,000 Å is formed on a transparent conductive layer can also be used in order to prevent a short-circuit phenomenon that occurs due to the incorporation of foreign materials, and the like.

Further, in the case of a reflection-type light valve (for example, a rear view mirror for an automobile, and the like), a conductive metal thin film such as aluminum, gold or silver, which is a reflector, may be directly used as an electrode.

When an electric field is not applied to the film 1 of the present invention, the film 1 of the present invention exhibits a sharp colored state caused by the dichroism effect of light polarization variable particles 4 due to the Brownian motion of the light polarization variable particles 4 in the suspension agent.

However, when an electric field is applied, the light polarization variable particles 4 are arranged in parallel to the electric field, and a suspension agent with a refractive index similar to that of the polymer resin 2 is used, so that the film is converted into a colorless and transparent state, and there is no scattering or deterioration in transparency according to the viewing angle.

Furthermore, since the light valve is manufactured in the form of a film 1, the problems that emerged when a light valve in the related art is manufactured using the liquid light-polarizing suspension 3 as it is, were solved.

The light valve using the film 1 according to the present invention may be used for indoor partitions and window panes for construction, various flat display devices used in the electronic industry and video equipment, alternatives to various instrument panels and existing liquid crystal display elements, optical shutters, various indoor and outdoor advertisements and information display boards, automobile windshields, rear view mirrors, sun roof, and the like, and may be applied to eyeglasses, security mirrors, and the like.

The light valve using the film 1 according to the present invention may be used for indoor partitions and window panes for construction, various flat display devices used in the electronic industry and video equipment, alternatives to various instrument panels and existing liquid crystal display elements, optical shutters, various indoor and outdoor advertisements and information display boards, automobile windshields, rear view mirrors, sun roof, and the like, and may be applied to eyeglasses, security mirrors, and the like.

While this invention has been described in connection with what is presently considered to be practical exemplary embodiments, it is to be understood that the invention is not limited to the disclosed embodiments. On the contrary, it is intended to cover various modifications and equivalent arrangements included within the spirit and scope of the appended claims.

## Claims

1. A method for manufacturing a light valve, wherein the light valve is composed of a film 1 in which a light polarizing suspension 3, containing: 5 to 20 wt% of light polarization variable particles 4 showing light polarization characteristics and having a size of 0.2 to 0.5 µm; 2 to 10 wt% of a dispersion aid; and 80 to 93 wt% of a suspension agent which is a plasticizer, is dispersed in the form of fine droplets 5 in a polymer resin 2 having excellent adhesive strength to a substrate 9,
wherein a weight ratio of the droplets 5 and the polymer resin 2 is 0.5 to 1:1.

2. The method of claim 1, wherein
the light valve comprises any one or two among a liquid light-polarizing suspension 3 produced by mixing light polarization variable particles 4 produced by adding a polymer material which enhances an effect of dispersing light polarization variable particles 4 while having no affinity for a polymer resin 2 which is a film medium with a plasticizer solution during the preparation of the light polarization variable particles 4, or a liquid light-polarizing suspension 3 prepared by additionally adding a polymer dispersant to the liquid light-polarizing suspension 3.

3. The method of claim 2, wherein
the light valve is manufactured by a phase separation method by a heat drying method after mixing a polymer resin 2 solution obtained by dissolving the polymer resin 2 having excellent adhesive strength to the substrate 2 in a solvent with the liquid light-polarizing suspension 3.

4. The method of claim 3, wherein
the polymer resin 2 is polyvinyl butyral, and regarding the plasticizer, at least one plasticizer among diisooctyl phthalate-, dioctyl phthalate-, butyloctyl phthalate-, dioctyl isophthalate-, trioctyl trimellitate- and trioctyldecyl trimellitate-based plasticizers is used as a suspension agent.

5. The method of claim 1, wherein
the polymer resin 2 is polyvinyl butyral, and regarding a suspension agent constituting the light-polarizing suspension 3, at least one plasticizer among trioctyl trimellitate- or trioctyldecyl trimellitate-based plasticizers is used as the suspension agent.

6. The method of claim 1, wherein
as the dispersion aid, an A-B block copolymer or graft polymer of poly(neopentyl-block-hydroxyethyl methacrylate), acrylonitrile-styrene, and poly(neopentyl methacrylate-block-styrene) is used.

7. A light valve manufactured by the method of any one of claims 1 to 6.

## Patentansprüche

1. Verfahren zur Herstellung eines Lichtventils, wobei das Lichtventil aus einem Film 1 zusammengesetzt ist, in dem eine lichtpolarisierende Suspension 3, enthaltend: 5 bis 20 Gew.-% lichtpolarisierende variable Teilchen 4, die Lichtpolarisationseigenschaften zeigen und eine Größe von 0,2 bis 0,5 µm haben; 2 bis 10 Gew.-% eines Dispersionshilfsmittels; und 80 bis 93 Gew.-% eines Suspensionsmittels, das ein Weichmacher ist, in Form von feinen Tröpfchen 5 in einem Polymerharz 2 mit ausgezeichneter Haftfestigkeit an einem Substrat 9 dispergiert ist,
wobei das Gewichtsverhältnis zwischen den Tröpfchen 5 und dem Polymerharz 2 0,5 bis 1:1 beträgt.

2. Verfahren nach Anspruch 1, wobei
das Lichtventil eine oder zwei der folgenden Substanzen umfasst: eine flüssige lichtpolarisierende Suspension 3, die durch Mischen von lichtpolarisierenden variablen Teilchen 4 hergestellt wird, die durch Zugabe eines Polymermaterials hergestellt werden, das die Wirkung des Dispergierens von lichtpolarisierenden variablen Teilchen 4 verstärkt, während es keine Affinität zu einem Polymerharz 2 hat, das ein Filmmedium mit einer Weichmacherlösung während der Herstellung der lichtpolarisierenden variablen Teilchen 4 ist, oder eine flüssige lichtpolarisierende Suspension 3, die durch zusätzliche Zugabe eines Polymerdispergiermittels zu der flüssigen lichtpolarisierenden Suspension 3 hergestellt wird.

3. Verfahren nach Anspruch 2, wobei
das Lichtventil durch ein Phasentrennverfahren durch ein Wärmetrocknungsverfahren hergestellt wird, nachdem eine Lösung des Polymerharzes 2, die durch Auflösen des Polymerharzes 2 mit hervorragender Haftfestigkeit an dem Substrat 2 in einem Lösungsmittel erhalten wurde, mit der flüssigen lichtpolarisierenden Suspension 3 gemischt wurde.

4. Verfahren nach Anspruch 3, wobei
das Polymerharz 2 Polyvinylbutyral ist und hinsichtlich des Weichmachers mindestens ein Weichmacher aus der Gruppe der Weichmacher auf Diisooctylphthalat-, Dioctylphthalat-, Butyloctylphthalat-, Dioctylisophthalat-, Trioctyltrimellitat- und Trioctyldecyltrimellitatbasis als Suspensionsmittel verwendet wird.

5. Verfahren nach Anspruch 1, wobei
das Polymerharz 2 Polyvinylbutyral ist und als Suspensionsmittel, das die lichtpolarisierende Suspension 3 bildet, mindestens ein Weichmacher auf Basis von Trioctyltrimellitat oder Trioctyldecyltrimellit als Suspensionsmittel verwendet wird.

6. Verfahren nach Anspruch 1, wobei
als Dispersionshilfsmittel ein A-B-Block-Copolymer oder Pfropfpolymer aus Poly(neopentyl-block-hydroxyethylmethacrylat), Acrylnitril-Styrol und Poly(neopentylmethacrylat-block-styrol) verwendet wird.

7. Lichtventil, hergestellt nach dem Verfahren eines der Ansprüche 1 bis 6.

## Revendications

1. Procédé de fabrication d'une valve de lumière, dans lequel la valve de lumière est composée d'un film 1 dans lequel une suspension de polarisation de la lumière 3, contenant : 5 à 20 % en poids de particules variables de polarisation de la lumière 4 présentant des caractéristiques de polarisation de la lumière et ayant une taille de 0,2 à 0,5 µm ; 2 à 10 % en poids d'un auxiliaire de dispersion ; et 80 à 93 % en poids d'un agent de suspension qui est un plastifiant, est dispersée sous forme de fines gouttelettes 5 dans une résine polymère 2 ayant une excellente force d'adhérence à un substrat 9,
dans lequel un rapport pondéral des gouttelettes 5 et de la résine polymère 2 est de 0,5 à 1:1.

2. Procédé selon la revendication 1, dans lequel
la valve de lumière comprend l'une quelconque ou deux parmi une suspension liquide de polarisation de la lumière 3 produite par mélange de particules variables de polarisation de la lumière 4 produites par ajout d'un matériau polymère qui améliore un effet de dispersion des particules variables de polarisation de la lumière 4 tout en n'ayant aucune affinité pour une résine polymère 2 qui est un support de film avec une solution de plastifiant pendant la préparation des particules variables de polarisation de la lumière 4, ou une suspension liquide de polarisation de la lumière 3 préparée par ajout additionnel d'un dispersant polymère à la suspension liquide de polarisation de la lumière 3.

3. Procédé selon la revendication 2, dans lequel
la valve de lumière est fabriquée par un procédé de séparation de phase par un procédé de séchage à chaud après mélange d'une solution de résine polymère 2 obtenue par dissolution de la résine polymère 2 ayant une excellente force d'adhérence au substrat 2 dans un solvant avec la suspension liquide de polarisation de la lumière 3.

4. Procédé selon la revendication 3, dans lequel
la résine polymère 2 est du polyvinyl butyral, et concernant le plastifiant, au moins un plastifiant parmi les plastifiants à base de phtalate de diisooctyle, de phtalate de dioctyle, de phtalate de butyloctyle, d'isophtalate de dioctyle, de trimellitate de trioctyle et de trimellitate de trioctyldécyle est utilisé comme agent de suspension.

5. Procédé selon la revendication 1, dans lequel
la résine polymère 2 est du polyvinyl butyral, et concernant un agent de suspension constituant la suspension de polarisation de la lumière 3, au moins un plastifiant parmi les plastifiants à base de trioctyl trimellitate ou de trioctyldécyl trimellitate est utilisé comme agent de suspension.

6. Procédé selon la revendication 1, dans lequel
un copolymère à blocs A-B ou un polymère greffé de poly(néopentyl-méthacrylate de bloc hydroxyéthyle), d'acrylonitrile-styrène et de poly(néopentyl méthacrylate de bloc-styrène) est utilisé comme auxiliaire de dispersion.

7. Valve de lumière fabriquée par le procédé selon l'une quelconque des revendications 1 à 6.
